Europäisches Patentamt

European Patent Office

Office européen des brevets

(19)

(11) Veröffentlichungsnummer: **0 132 696**
**B1**

# EUROPÄISCHE PATENTSCHRIFT

(12)

(45) Veröffentlichungstag der Patentschrift:
30.03.88

(21) Anmeldenummer: 84108071.6

(22) Anmeldetag: 10.07.84

(51) Int. Cl.⁴: **B 60 T 17/00,** F 01 N 1/10

(54) **Geräuschdämpfer für Ventilanordnungen in Druckluftanlagen, insbesondere in Druckluftbremsanlagen von Fahrzeugen.**

(30) Priorität: 02.08.83 DE 3327902

(43) Veröffentlichungstag der Anmeldung:
13.02.85 Patentblatt 85/7

(45) Bekanntmachung des Hinweises auf die Patenterteilung:
30.03.88 Patentblatt 88/13

(84) Benannte Vertragsstaaten:
BE CH DE FR IT LI NL SE

(56) Entgegenhaltungen:
DE - A - 2 932 777
FR - A - 2 451 530

(73) Patentinhaber: KNORR-BREMSE AG, Moosacher Strasse 80 Postfach 401060, D-8000 München 40 (DE)

(72) Erfinder: Mrosek, Helmut,
Christoph-von-Gluck-Platz 14, D-8000 München 40 (DE)
Erfinder: Pellecuer, François, Leonhard-Frank-Strasse 1,
D-8000 München 40 (DE)
Erfinder: Schuhbeck, Christian, Schopfgraben 21,
D-8160 Miesbach (DE)

ACTORUM AG

**Beschreibung**

Die Erfindung betrifft einen Geräuschdämpfer nach dem Gattungsbegriff des Patentanspruches 1.

Bei Geräuschdämpfern bekannter Art ist im Gehäuse des Dämpfers ein schallschluckendes Material vorgesehen, welches z.B. aus Polyuretan-Schaumstoff, aus Metallspänen oder dgl. besteht. Die in den Geräuschdämpfer eintretende Luft wird im wesentlichen ohne Umlenkung durch den Schallschluckeinsatz hindurchgeleitet und verlässt den Geräuschdämpfer über eine als Spritzschutz vorgesehene, elastische Membrane. Diese ist an der Unterseite des Geräuschdämpfers fixiert. Die Leistungsfähigkeit derartiger Geräuschdämpfer hängt primär von der Beschaffenheit des Schallschluckmaterials ab, natürlich auch von der Baulänge und von den vorgegebenen Druckverhältnissen. Die Dämpfungsqualität des Schallschluckmaterials ist gefährdet, wenn im Luftstrom transportierte Schmutzpartikel die Poren des Schallschluckmaterials verstopfen. Bei einer Verunreinigung des Schallschluckeinsatzes derartiger Geräuschdämpfer ist es erforderlich, von Zeit zu Zeit einen Austausch vorzunehmen, was bei staubigen Einsatzbedingungen, je nach Verwendung des Geräuschdämpfers, zu Kostenproblemen führen kann. Es kann sich auch als unumgänglich erweisen, zusätzliche Massnahmen zur Luftreinigung zu treffen.

Bei einer weiterhin bekannten Geräuschdämpferanordnung (DE-A 2 932 777) ist innerhalb eines Gehäuses strömungsaufwärts zum geräuschdämpfenden Schallschluckeinsatz aus porösem Material ein Leitkörper eingesetzt, welcher den eintretenden Luftstrom in einen Hauptluftstrom und einen Nebenluftstrom aufteilt. Der Hauptluftstrom passiert das Material des Schallschluckeinsatzes, welcher durch Verunreinigungen in der Luft im Laufe der Zeit zusetzen kann, so dass die Luft in zunehmendem Masse gezwungen ist, dem Verlauf des Nebenluftstromes zu folgen. Wie im Falle herkömmlicher, den gesamten Querschnitt des Geräuschdämpfergehäuses einnehmender Schallschluckeinsätze ist die Gefahr der Verstopfung des Dämpfungsmaterials ständig gegeben, ausserdem können sich in gleichem Masse die Dämpfungseigenschaften hierbei entscheidend ändern. Auch bei derartigen Schallschluckeinsätzen ist infolgedessen ein Austausch unumgänglich.

Davon ausgehend besteht die Aufgabe der Erfindung darin, einen Geräuschdämpfer der in Rede stehenden Art so auszugestalten, dass der einen wesentlichen Anteil der Geräuschdämpfung herbeiführende Schallschluckeinsatz im wesentlichen frei von Verschmutzung gehalten werden kann, d.h., die im zu dämpfenden Luftstrom befindlichen Schmutzpartikel sollen den Geräuschdämpfer passieren können, ohne im Material des Schallschluckeinsatzes hängenzubleiben. Gleichzeitig soll die gewünschte Drosselung und Geräuschdämpfung innerhalb eines baulich möglichst kurz dimensionierten Gehäuses vollziehbar sein.

Zur Lösung dieser Aufgabe dienen die Merkmale nach dem Kennzeichnungsteil des Patentanspruches 1.

Durch den Aufbau des Geräuschdämpfers und die hierdurch hervorgerufene Funktionsweise erfährt der in das Geräuschdämpfergehäuse eintretende Luftstrom in einem ersten Gehäuseabschnitt eine Umlenkung und Aufteilung, dergestalt, dass ein Hauptluftstrom in einen Expansionsraum eintritt und von diesem ausgehend das Schallschluckmaterial passiert, während ein Nebenluftstrom den ersten Gehäuseabschnitt im wesentlichen ohne Richtungsänderung passiert und hierbei Schmutzpartikel so mitführt, dass diese nicht im Schallschluckmaterial hängenbleiben. Die strömungsabwärts des Schallschluckeinsatzes befindliche Bodenplatte vermittelt eine getrennte Abführung des Hauptluftstromes und des Nebenluftstromes, derart, dass der die Schmutzpartikel tragende Nebenluftstrom das Gehäuse durch eine oder mehrere Ablassöffnungen verlässt, welche getrennt von Öffnungen bzw. Bohrungen für den Austritt des Hauptluftstromes bestehen. Die Luftstromführung mit unterschiedlichen Richtungen und unterschiedlichen Geschwindigkeiten als auch unterschiedlicher Verteilung im Gehäuse trägt zu einer hervorragenden Geräuschdämpfung bei und vermittelt den zusätzlichen Vorteil, dass der Schallschluckeinsatz im wesentlichen frei von Schmutzpartikeln bleibt, da diese, getragen durch den Nebenluftstrom, den Schallschluckeinsatz im Bereich der zentralen Bohrung passieren können.

Die Erfindung ist nachfolgend anhand eines Ausführungsbeispiels unter Bezugnahme auf die beigefügte Zeichnung erläutert.

Fig. 1 ist eine Längsschnittansicht des Geräuschdämpfers nach der Erfindung; und

Fig. 2 ist eine Schnittansicht von Linie II–II in Fig. 1.

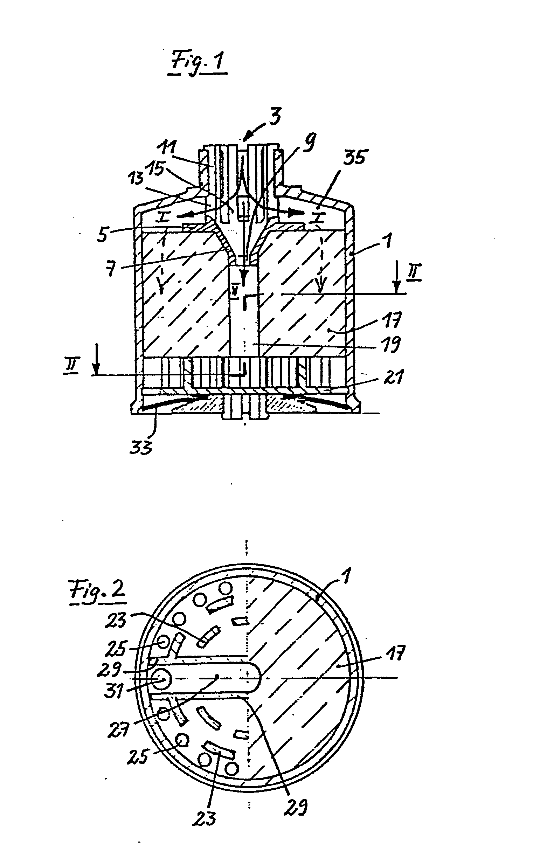

Der in Fig. 1 und 2 dargestellte Geräuschdämpfer weist ein Gehäuse 1 mit einer zentralen Einlassöffnung 3 auf. Innerhalb des Gehäuses 1 ist ein Leitkörper 5 befestigt, welcher einen kegeligen Ansatz 7 mit einer am unteren Ende des Ansatzes befindlichen Öffnung 9 trägt. Der Leitkörper 5 ist mittels eines hohlzylindrischen Fortsatzes 11 im Gehäuse 1 befestigt. Im dargestellten Ausführungsbeispiel ist der Fortsatz 11 im oberen Ende des Gehäuses 1 fixiert und weist im Bereich der Erweiterung des Gehäuses Durchbrechungen bzw. Fenster 13 auf. Hierdurch wird der von oben in das Gehäuse 1 eintretende Luftstrom in einen Hauptluftstrom I und einen Nebenluftstrom II unterteilt. Der radiale Hauptluftstrom I besteht aus einer Vielzahl von einzelnen Teilströmen, welche die vorgenannten Fenster 13 im Fortsatz 11 passieren, während der Nebenluftstrom II die Öffnung 9 passiert. Fig. 1 lässt fernerhin erkennen, dass im Inneren, d.h. am Innenumfang des Fortsatzes 11, Stege 15 vorgesehen sind. Die Stege 15, zwischen welchen die Fenster 13 geformt sind, wirken gegenüber dem in das Gehäuse 1 eintretenden Luftstrom als Drosselelemente.

Unterhalb des Leitkörpers 5 befindet sich ein Schallschluckeinsatz 17, welcher aus einem geeigneten schallschluckenden Material besteht, so aus Polyuretan-Schaumstoff oder dgl. Der Schallschluckeinsatz 17 ist der äusseren Formgebung ·des kegeligen Ansatzes 7 angepasst und weist einen in der Mitte verlaufenden, länglichen Kanal 19 auf, in welchen der Nebenluftstrom II eintritt.

In der Darstellung nach Fig. 1 ist unterhalb des Schallschluckeinsatzes 17 eine Bodenplatte 21 vorgesehen; diese verfügt über Rippen 23 und Bohrungen 25, wobei die Bohrungen 25 gemäss Fig. 2 beispielsweise in Ringform ausgerichtet nahe der Innenwand des Gehäuses 1 bestehen.

Die Schnittansicht nach Fig. 2 lässt fernerhin erkennen, dass die Bodenplatte 21 zumindest einen radial sich erstreckenden Kanal 27 aufweist, welcher beidseitig durch Rippen 29 begrenzt ist und zu einer radial aussen liegenden Bohrung 31 führt. In der Mitte ist der Kanal 27 mit dem Kanal 19 verbunden, derart, dass der Nebenluftstrom II nach Passieren des Kanals 19 im Bereich der Bodenplatte 21 rechtwinkelig umgeleitet in den Kanal 27 gelangt und diesen nach nochmaliger Umlenkung über die Bohrung 31 verlässt. An der Unterseite der Bodenplatte 21 ist eine Membrane 33 fixiert.

Die Wirkungsweise des Geräuschdämpfers nach der Erfindung ist wie folgt:

Die in die Oberseite des Gehäuses 1 des Geräuschdämpfers eintretende Luft wird, wie vorstehend ausgeführt ist, in einen Hauptluftstrom und in einen Nebenluftstrom aufgeteilt. Der Hauptluftstrom, welcher aus mehreren Teilströmen bestehen kann, gelangt in den Expansionsraum 35, welcher zwischen der Gehäuseoberseite und dem Leitkörper 5 besteht. Innerhalb des Expansionsraumes wird die zuströmende Luft stark verwirbelt, so dass der Schallschluckeinsatz 17 nachfolgend weniger stark und gleichmässiger beansprucht wird. Der in den Expansionsraum 35 eintretende Luftstrom wird bereits zuvor im Bereich der Stege 15 stark verwirbelt, wobei natürlich unterschiedliche Ausgestaltungen der Stege möglich sind.

Durch das starke Umlenken des Hauptluftstromes I in radialer Richtung werden Schmutzpartikel, die in der Luft vorhanden sein können, bevorzugt von dem axialen Nebenluftstrom II mitgerissen. Der kegelige Ansatz 7 dient dazu, eine möglichst hohe Strömungsgeschwindigkeit bei gleichzeitig kleiner lichter Weite der Öffnung aufrechtzuerhalten. Hierdurch tritt ein Selbstreinigungseffekt der Wandung des kegeligen Ansatzes 7 ein. Im Bereich der Bodenplatte 21 wird der die Schmutzpartikel tragende Luftstrom erneut umgelenkt und gelangt, wie vorstehend dargelegt ist, über den Kanal 27 in die Bohrung 31. Nachfolgend passiert der Luftstrom die elastische Membrane 33. Im dargestellten Ausführungsbeispiel nach Fig. 1 sind zwei Kanäle 27, also auch zwei Bohrungen 31 vorgesehen, obwohl ein einzelner Kanal mit einer einzelnen Bohrung für die Funktion bereits ausreicht. Im Rahmen des der Erfindung eigenen Gedankens können auch mehrere radial verlaufende Kanäle mit mehreren Bohrungen vergleichbarer Art vorgesehen sein.

Wie vorstehend dargelegt ist, gelangen die Schmutzpartikel, getragen durch den Nebenluftstrom, nach Passieren des Kanals 19, des Kanals 27 und der Bohrung 31 in die Aussenluft. Eine Verschmutzung des Schallschluckeinsatzes 17 durch die Schmutzpartikel ist auf diese Weise im wesentlichen ausgeschaltet, so dass die Schallschluck-Fähigkeit bzw. Durchlässigkeit des Schallschluckeinsatzes aufrechterhalten bleibt.

Der Hauptluftstrom I gelangt seinerseits über den Expansionsraum 35 in das Material des Schallschluckeinsatzes 17 und wird nach Passieren desselben über die im Boden der Bodenplatte 21 befindlichen Bohrungen 25 ins Freie geleitet. Die genannten Bohrungen 25 können kleine Löcher oder enge Schlitze sein, wobei der Gesamtauslassquerschnitt dieser Öffnungen bzw. Bohrungen um ein Vielfaches grösser ist als der einlass-seitige Drosselquerschnitt im Bereich des Fortsatzes 11 des Leitkörpers 5.

Der zuvor genannte Leitkörper 5 ist mit zur Drosselung dienenden Stegen 15 versehen, zwischen welchen sich die Fenster 13 radial gerichtet erstrecken und dadurch den Eintritt des Luftstroms in den Expansionsraum 35 ermöglichen. Die Höhe bzw. die Gesamtabmessungen der Fenster 13 können in gleicher Weise wie die Abmessungen der Stege 15 verschiedenartig gewählt sein, d.h., die Fenster 13 können beispielsweise durchgehend zwischen den Stegen 15 verlaufen, oder es können die Stege 15 oberhalb der Fenster teilweise oder ganz geschlossen sein. In jedem Fall ist es im Rahmen des der Erfindung eigenen Gedankens möglich, den Drosselbereich innerhalb der Einschnürung des Gehäuses 1 verschiedenartig auszugestalten, vorausgesetzt, dass nachfolgend die Aufteilung des Luftstromes in den Hauptluftstrom I und den im wesentlichen die Schmutzpartikel tragenden Nebenluftstrom II stattfindet.

**Patentansprüche**

1. Geräuschdämpfer für Ventilanordnungen in Druckluftanlagen, insbesondere in Druckluftbremsanlagen von Fahrzeugen, mit einem im Gehäuse des Geräuschdämpfers eingesetzten Schallschluckeinsatz aus einem schallschluckenden Material, welches der im Geräusch zu dämpfende Luftstrom in Teilströmen von vorgegebener Richtung passiert, dadurch gekennzeichnet, dass innerhalb des Gehäuses (1) des Geräuschdämpfers strömungsaufwärts zum Schallschluckeinsatz (17) ein den eintretenden Luftstrom in einen Hauptluftstrom (I) und einen Nebenluftstrom (II) aufteilender hohler Leitkörper (5) vorgesehen ist, wobei vom hohlen Leitkörper (5) ausgehend ein axialer rohrförmiger Ansatz (7) in einen zentral den Schallschluckeinsatz (17) durchsetzenden Kanal (19) für den Nebenluftstrom (II) mündet und im rechten Winkel vom Leitkörper (5) Fenster (13) für den Hauptluftstrom (I) in einen Expansionsraum (35) führen, der zwischen der Gehäuseoberseite und dem Schallschluckeinsatz besteht.

2. Geräuschdämpfer nach Anspruch 1, dadurch gekennzeichnet, dass der Leitkörper (5) mittels eines entgegengesetzt zum Ansatz (7) ausgebildeten hohlzylindrischen Fortsatzes (11) im Luftstromeinlass des Gehäuses (1) befestigt ist, wobei der Fortsatz (11) senkrecht zur Längsachse des Geräuschdämpfers von den Fenstern (13) durchsetzt ist, welche unter gegenseitigem Winkelabstand zueinander in den Expansionsraum (35) münden, derart, dass der in den Expansionsraum gelangende Hauptluftstrom (I) nach nochmaliger Umlenkung das luftdurchlässige Material des Schallschluckeinsatzes, parallel zum zentralen Kanal (19) gerichtet, passiert.

3. Geräuschdämpfer nach Anspruch 1, dadurch gekennzeichnet, dass sich im Gehäuse (1) unterhalb des Schallschluckeinsatzes (17) eine Bodenplatte (21) erstreckt, in welcher sich Luftaustrittsöffnungen (Bohrungen 25 und 31) für den Hauptluftstrom und den Nebenluftstrom befinden.

4. Geräuschdämpfer nach Anspruch 3, dadurch gekennzeichnet, dass die Öffnungsweite der Austrittsöffnungen für den Hauptluftstrom grösser ist als der Durchtrittsquerschnitt im drosselnden Bereich des Leitkörpers.

5. Geräuschdämpfer nach Anspruch 3 oder 4, dadurch gekennzeichnet, dass der den Schallschluckeinsatz zentral durchsetzende Kanal (19) in zumindest einen an der Oberseite der Bodenplatte ausgebildeten Kanal (27) mündet, dass sich der Kanal (27) bis nahe zum Innenumfang des Gehäuses (1) erstreckt und dass am Ende des Kanals (27) eine die Bodenplatte durchsetzende, zur Aussenluft führende Bohrung (31) vorgesehen ist, derart, dass der den zentralen Kanal (19) passierende Nebenluftstrom (II) in den Kanal (27) und über die Bohrung (31) zur Aussenluft gelangt.

6. Geräuschdämpfer nach Anspruch 5, dadurch gekennzeichnet, dass auf der vom Kanal (27) nicht bedeckten Oberfläche der Bodenplatte (21) Rippen (23) vorgesehen sind und dass von der die Rippen (23) tragenden Fläche der Bodenplatte Bohrungen (25) zur Aussenluft führen, derart, dass der in den Expansionsraum (35) gelangende Hauptluftstrom (I), parallel zum Nebenluftstrom (II) das Material des Schallschluckeinsatzes (17) durchströmend, die Bodenplatte durch die Bohrungen (25) hindurch passiert.

## Claims

1. Silencer for valve arrays in compressed-air systems, particularly in compressed-air brake systems in vehicles, comprising a sound-absorbing element of sound-absorbing material in the silencer housing, through which material the air to be silenced flows in partial quantities of preset direction, wherein within the housing (1) of the silencer there is, upstream of the sound-absorbing element (17), a hollow guide body (5) which divides the entering air into a main stream (I) and a subordinate stream (II), which hollow guide body (5) has an axial, tubular attachment (7) opening into a duct (19) passing centrally through the sound-absorbing element (17) for the subsidiary stream (II) and also, at right-angles to itself, windows (13) leading into an expansion chamber (35) for the main stream (I), the said expansion chamber (35) consisting of the upper side of the housing and the sound-absorbing element.

2. Silencer as defined in Claim 1, wherein the guide body (5) is mounted in the air inlet into the housing (1) by a hollow cylindrical projection (11) trained in the opposite direction to the attachment (7), the projection (11) being so filled perpendicularly to the longitudinal axis of the silencer with the windows (13) which open into the expansion chamber (35) at a certain angular distance from one another that the main stream (1) entering the expansion chamber passes, after being redirected again, through the permeable material of the sound-absorbing element parallel to the central duct (19).

3. Silencer as defined in Claim 1, wherein there is in the housing (1) a baseplate (21) which extends beneath the sound-absorbing element (17) and which contains air outlet openings (holes 25 and 31) for the main stream and subordinate stream.

4. Silencer as defined in Claim 3, wherein the width of the outlet openings for the main stream is larger than the passage cross-section in the throttling part of the guide body.

5. Silencer as defined in Claim 3 or 4, wherein the duct (19) passing centrally through the sound-absorbing element opens into at least one duct (27) provided on the upper side of the baseplate, wherein the duct (27) extends close to the inner circumference of the housing (1), and wherein a hole (31) which passes through the baseplate and which leads to the outside air is provided at the end of the duct (27), such that the subordinate stream (II) passing through the central duct (19) enters the duct (27) and reaches the outside air through the hole (31).

6. Silencer as defined in Claim 5, wherein ribs (23) are provided on that surface of the baseplate (21) that is not covered by the duct (27), and wherein holes (25) lead to the outside air from the baseplate surface which carries the ribs (23), such that the main stream (I) entering the expansion chamber (35) passes through the baseplate through the holes (25), flowing parallel to the subordinate stream (II) through the material of the sound-absorbing element (17).

## Revendications

1. Amortisseur de bruit pour dispositifs de valves situés dans des installations de freins à air comprimé, en particulier dans des installations de frein à air comprimé de véhicules, comprenant une cartouche insonorisante en matériau insonorisant placée dans le boîtier de l'amortisseur et traversée par le flux d'air à amortir sous la forme de flux partiels venant d'une direction donnée, caractérisé en ce qu'un corps creux de guidage (5) divisant le flux d'air entrant en un flux principal (I) et un flux secondaire (II) est prévu à l'intérieur du boîtier (1) de l'amortisseur et en amont par rapport à la cartouche (17), de sorte qu'à partir dudit corps creux de guidage (5) un embout tubulaire axial (7) débouche dans un canal (19) traversant le centre de la cartouche (17) pour le flux secondaire (II), et que des fenêtres (13) dévient le flux principal (I) à angle droit depuis le corps de guidage (5) vers un volume d'expansion (35), constitué par l'espace entre la face supérieure du boîtier et de la cartouche.

2. Amortisseur de bruit suivant revendication 1, caractérisé en ce que le corps de guidage (5) est fixé dans le canal d'admission du flux d'air du boîtier (1) par un prolongement (11) cylindrique et creux placé à l'opposé de l'embout (7), ledit prolongement étant découpé perpendiculairement à l'axe de l'amortisseur par des fenêtres (13), lesquelles débouchent dans le volume d'expansion (35) avec un certain décalage angulaire les unes par rapport aux autres, de sorte que le flux principal (I) qui gagne le volume d'expansion traverse, après une déviation supplémentaire, le matériau poreux de la cartouche, elle-même disposée parallèlement au canal (19).

3. Amortisseur de bruit suivant revendication 1, caractérisé en ce qu'une plaque de fond (21) s'étend dans le boîtier (1) sous la cartouche (17) et présente des ouvertures de sortie d'air (trous (25) et (31) pour le flux principal et le flux secondaire.

4. Amortisseur de bruit suivant revendication 3, caractérisé en ce que la section des ouvertures d'échappement du flux d'air principal est plus grande que la section de passage dans la zone étranglée du corps de guidage.

5. Amortisseur de bruit suivant revendication 3 ou 4, caractérisé en ce que le canal (19) traversant de part en part la cartouche insonorisante débouche dans au moins l'un des canaux (27) formés sur la face supérieure de la plaque de fond, que le canal (27) s'étend jusqu'à proximité du périmètre intérieur du boîtier (1), et qu'un trou (31) est prévu à l'extrémité du canal (27), ledit trou traversant la plaque de fond et communiquant avec l'air libre, que le flux d'air secondaire (II) traversant le canal central (19) gagne le canal (27) puis l'atmosphère par le trou (31).

6. Amortisseur de bruit suivant revendication (5), caractérisé en ce que des nervures (23) sont prévues sur la partie de la surface supérieure de la plaque de fond (21) non occupée par le canal (27), et que des trous (25) conduisent de la surface de la plaque de fond portant les nervures (23) à l'air libre, de sorte que le flux principal (I) gagnant le volume d'expansion (35) et traversant la matière de la cartouche insonorisante (17) parallèlement au flux d'air secondaire (II), traverse la plaque de fond par les trous (25).

_Fig. 1_

_Fig. 2_